(19) Europäisches Patentamt
European Patent Office
Office européen des brevets

(11) Publication number: **0 190 996**
**A2**

# (12) EUROPEAN PATENT APPLICATION

(21) Application number: 86810053.8

(22) Date of filing: 29.01.86

(51) Int. Cl.[4]: A 01 N 25/10
C 08 G 18/67, C 08 F 299/02
C 08 F 299/06

(30) Priority: 04.02.85 US 697829

(43) Date of publication of application: 13.08.86 Bulletin 86/33

(84) Designated Contracting States: AT BE CH DE FR GB IT LI NL SE

(71) Applicant: CIBA-GEIGY AG
Klybeckstrasse 141
CH-4002 Basel(CH)

(72) Inventor: Mueller, Karl Friedrich
119 West 77th Street
New York New York 10024(US)

(72) Inventor: Heiber, Sonia Jaworiw
48 David's Lane
Bedford Hills New York 10507(US)

## (54) Crosslinked, porous polymers for controlled delivery of agricultural ingredients.

(57) A controlled-release, delivery composition which comprises (A) a crosslinked copolymer, capable of swelling in ethanol to give a swollen copolymer containing at least 40% by weight of ethanol, and capable of swelling in water to give a swollen copolymer containing no more than 20% by weight of water, where the swelling ratio (% ethanol: % water) is 2:1 to 22:1, which comprises the copolymerization product of (a) 50 to 99 % by weight of said copolymer of a water-insoluble monoolefinic monomer or (a) with 0 to 45 % weight of total monomers of a water-soluble monoolefinic monomer, with (b) 50 to 1 % by weight, but not more than 20 mol % of a divinyl or polyvinyl crosslinking agent; and (B) an effective amount of an active agricultural ingredient is useful for the controlled and prolonged release of said ingredient.

Croydon Printing Company Ltd.

65-15296/=/CGC 1047

# Crosslinked, porous polymers for controlled delivery of agricultural ingredients

In the pharmaceutical industry much work has been devoted during recent years to improving the effectiveness, safety and practicality of orally administered drugs. Work has been directed toward the goal of prolonging the release of an orally taken drug over a period of several hours. Such a prolonged release has the following advantages: peak blood levels of the drug, which sometimes represent toxic levels, are avoided since not all the drug is released into the stomach at the same time; secondly, drug concentrations in the blood are maintained for a longer time within the therapeutic range, thereby increasing the overall effectiveness of the drug and reducing the overall dose-size necessary for treatment; thirdly, drugs which would have to be taken in conventional form several times daily for the treatment of chronic diseases, can be administered in once- or twice-a-day dose forms, which are safer and more convenient for the patient.

Pharmaceutical compositions directed toward meeting these objectives are described in our copending application Serial No. 523,236.

It has now been found that the crosslinked polymer matrix useful for the controlled release of a pharmaceutical medicament can be useful as well in the controlled release in an aqueous environment of agricultural chemicals.

As is described in detail later in this application, the instant crosslinked polymer matrix has a limited swelling capacity in water and a much greater swelling capacity in ethanol. It is thus somewhat

hydrophobic in nature the degree of hydrophobicity being determined by the exact proportions of monomers and crosslinking agent (macromer) used in its preparation.

U.S. Patent No. 4,192,827 described water-insoluble hydrophilic copolymers prepared from the same monomers and macromers, but in quite different proportions so that the copolymers are clearly hydrophilic in nature and highly swellable in water. These copolymers of U.S. 4,192,827 are disclosed as being useful as carriers for pharmaceuticals, fragrances and agricultural chemicals.

It is an object of this invention to produce a controlled-release, delivery composition comprising an effective amount of an active agricultural ingredient in a polymer substrate which can swell in polar organic solvents to a much greater than conventional polymers used for drug-delivery and which therefore can be imbibed with active ingredients to a correspondingly high concentration while at the same time exhibiting only a moderate degree of swelling in water.

The ability of a polymer to absorb a large amount of water has always been considered a necessity for a polymeric orally used drug-delivery matrix. Hydrogels have therefore been the only materials previously used for this purpose.

It has now very unexpectedly been discovered that polymers can be synthesized in aqueous suspension or in bulk which can swell in organic solvents such as ethanol to a much greater extent than conventional hydrogels, being capable of absorbing from 40 to 90 % by weight of ethanol and typically showing a ratio of swelling (% ethanol: % water) of 3:1 to 9:1.

Therefore these beads can be loaded from solution in an organic solvent with a soluble agricultural chemical to correspondingly much higher concentration levels than can conventional hydrogel-type polymeric carriers. At the same time it has been discovered that

even if the amount of water absorbed by the novel polymers is lower than that of conventional hydrogels, namely lying in the range of 2-20 % by weight of water, they still satisfy the requirement of releasing imbibed agricultural chemical completely in a reasonable time frame.

The novel controlled-release, agricultural chemical-delivery compositions of the present invention comprise

(A) a crosslinked copolymer, capable of welling in ethanol to give a swollen copolymer containing at least 40 % by weight of ethanol, and capable of welling in water to give a swollen copolymer containing no more than 20 % by weight of water, where the swelling ratio (% ethanol: % water) is 2:1 to 22:1, and

(B) an effective amount of an active agricultural ingredient.

The agricultural chemical-containing, copolymer beads are synthesized by free-radical initiated polymerization of the above-mentioned monomers in aqueous suspension, preferably in the presence of 1-50 % by weight of an inert diluent, followed by imbibing the washed and dried polymer with the active ingredient dissolved in an organic solvent which solvent is subsequently removed by heating or in vacuo.

It is a further object of this invention to prepare copolymers which exhibit unexpectedly high degrees of swelling in organic solvents while their degree of swelling in water is only moderate or low. Therefore, they can imbibe large amounts of active ingredients from organic solutions, yet are ideally suited for the controlled and prolonged release of such active ingredients into an aqueous environment.

The instant invention pertains to a controlled-release, agricultural chemical-delivery composition which comprises

(A) a crosslinked copolymer, capable of swelling in ethanol to give a swollen copolymer containing at least 40 % by weight of ethanol, and capable of swelling in water to give a swollen copolymer containing no more than 20 % by weight of water, where the swelling ratio (% ethanol: % water) is 2:1 to 22:1, which copolymer is the copolymerization product of

(a) 50 to 99 % by weight of said copolymer of (aa) a water-insoluble monoolefinic monomer, or mixture of said monomers, or a water-insoluble monoolefinic monomer, or mixture of said monomers with 0 to 45 % by weight of total monomers of (bb) a water-soluble monoolefinic monomer, or mixture of said water-soluble monomers, with

(b) 50 to 1 % by weight of said copolymer of a divinyl or polyvinyl crosslinking agent having a molecular weight of 100 to 10,000, but where (b) is not more than 20 mol % of component (a), and

(B) an effective amount of an active agricultural ingredient.

Preferably the crosslinked copolymer has a swelling ratio (% ethanol: % water) of 3:1 to 15:1; most preferably 4:1 to 8:1.

In order to assure that the instant copolymers have high swellability in ethanol coupled with moderate swellability in water it is preferable that at least a third by weight of the water-insoluble monomer of component (a) is a monomer with an alkyl group of 4 to 21 carbon atoms.

A preferred embodiment of the instant invention is a composition wherein the copolymer (A) is the copolymerization product of 75-98 % by weight of component (a) and 25-2 % by weight of component (b).

Another preferred embodiment of the instant invention is a composition wherein component (a) comprised 70-95 % by weight of water-insoluble monomer (aa) and 30-5 % by weight of water-soluble monomer (bb).

A particularly preferred embodiment is a composition wherein component (a) is 75-0 % weight of methyl acrylate, methyl methacrylate or mixture thereof, and 25-100 % by weight of a $C_4$-$C_{10}$-alkyl acrylate or methacrylate, or mixture thereof.

(a) <u>The Vinyl Monomers</u>

The monomers used to prepare the crosslinked copolymers of the present invention can conveniently be divided into water-insoluble (aa) and water-soluble (bb) monomers. The water-insoluble comonomers include: the acrylic- and methacrylic esters and amides of mono-hydric linear or branched alcohols with from 1 to 2 carbon atoms, and which alcohols may be aliphatic, cycloaliphatic, or aromatic in nature. Examples are: methyl-, ethyl-, propyl-, iso-propyl-, n-, iso-, and tertiary butyl-, hexyl-, pentyl-, 2-ethylhexyl-, n-octyl-, 1,1,3,3-trimethylbutyl, decyl-, tridecyl-, hexadecyl-, stearyl-, cyclohexyl-, isobornyl-, dicyclopentadienyl-, menthyl-, dicyclopentadienylethyl-; phenyl-, benzyl-, methoxyethyl; ethoxyethyl-, furfuryl-, glycidyl-, acrylate or methacrylate as well as the corresponding amides; and acrylonitrile;

Vinyl esters, such as: vinyl acetate, vinyl propionate, vinyl benzoate.

Vinyl ethers such as: methyl-, propyl-, butyl-, methoxyethyl-vinyl ether. Fumarate, maleate and itaconate di-esters of the monohydric alcohol-residues mentioned above; styrene, α-methylstyrene.

The monomers may be used alone or in combination with each other. It is preferred that at least half of the water-insoluble monomers are monomers containing alkyl groups with at least 4 carbon atoms, such

as butyl acrylate or methacrylate; 2-ethylhexyl acrylate or methacrylate; n-octyl acrylate or methacrylate; di-n-butyl fumarate; benzyl methacrylate; vinyl butyrate; 1,1,3,3-tetramethylbutylacrylamide- and methacrylamide.

Preferred water-insoluble comonomers are methyl methacrylate, n-butyl acrylate, n-butyl methacrylate, 2-ethylhexyl acrylate, n-octyl acrylate and n-octyl methacrylate, glycidyl methacrylate and vinyl acetate or mixtures thereof.

Compositions where 10-60 % by weight of component (a) is n-butyl acrylate or 2-ethylhexyl acrylate are especially preferred.

The water-soluble monomer, bb, are preferably acrylic and/or methacrylic acid or the water-soluble derivatives thereof, such as hydroxyalkyl esters where alkyl is 2 to 4 carbon atoms, e.g. 2-hydroxyethyl, 3-hydroxypropyl, 2-hydroxypropyl or 2,3-dihydroxypropyl esters; also ethoxylated and polyethoxylated hydroxyalkyl esters such as esters of alcohols of the formula

$$HO-C_mH_m-O-(CH_2CH_2-O)_n-H$$

where

m represents 2 to 5 and
n represents 1 to 20, or esters of analogous alcohols, wherein a part of the ethylene oxide units is replaced by propylene oxide units. Also suitable are 3-(dimethylamino)-2-hydroxypropyl esters and amides. Another class of suitable derivatives of such acids are their water-soluble amides, such as unsubstituted amides and amides substituted by lower hydroxyalkyl, lower oxaalkyl or lower dialkylaminoalkyl groups where alkyl is 2 to 4 carbon atoms such as N-(hydroxymethyl)-acrylamide and -methacrylamide. N-(3-hydropropyl)acrylamide, N-(2-hydroxyethyl)methacrylamide and N-[1,1-dimethyl-2-(hydroxymethyl)-3-oxabutyl]acrylamide; water soluble hydrazine derivatives, such as dimethyl-2-hydroxypropylamine methacrylimide and the corresponding derivatives of acrylic acid.

Also useful, in combination with comonomers, are the lower hydroxyalkyl maleic esters and vinyl ethers where alkyl is 2 to 4 carbon atoms, for instance, di-(hydroxyalkyl) maleates, such as di(2-hydroxyethyl) maleate, and ethoxylated hydroxyalkyl maleates, hydroxyalkyl monomaleates, such as 2-hydroxyethyl monomaleate and alkoxylated hydroxyalkyl monomaleate together with vinyl ethers, vinyl esters, styrene or generally any monomer which will easily copolymerize with maleates or fumarates; hydroxyalkyl vinyl ethers, such as 2-hydroxyethyl vinyl ether, 4-hydroxybutyl vinyl ether, together with maleates, fumarates, or generally all monomers which will easily copolymerize with vinyl ethers.

Other water-soluble comonomers useful in this invention are: alkyl ethers of polyethoxylate hydroxyalkylesters of acrylic and methacrylic acid, such as esters of alcohols of the formula

$$HO-C_mH_mO-(CH_2CH_2-O)_n-CH_3$$

where
m = 2 to 5 and
n = 4 to 20.

Dialkylaminoalkyl esters and amides, such as 2-(dimethylamino)ethyl or 2-(diethylamino)ethyl acrylate and methacrylate, as well as the corresponding amides; amides substituted by lower oxa-alkyl or lower dialkylamino alkyl groups, such as N-(1,1-dimethyl-3-oxa-butyl)-acrylamide; water soluble hydrazine derivatives, such as trialkylamine methacrylimide, e.g., triethylamine-methacrylimide and the corresponding derivatives of acrylic acid. Monoolefinic sulfonic acids and their salts, such as sodium ethylene sulfonate, sodium styrene sulfonate and 2-acrylamido-2-methylpropanesulfonic acid; or monoolefinic derivatives of heterocyclic nitrogen-containing

monomers, such as N-vinylpyrrole, N-vinylsuccinimide, 1-vinyl-2-pyrrolidone, 1-vinylimidazole, 1-vinylindole, 2-vinylimidazole 4(5)-vinylimidazole, 2-vinyl-1-methylimidazole, 5-vinylpyrazoline, 3-methyl-5-isopropenylpyrazole, 5-methylenehydantoin, 3-vinyl-2-oxazolidone, 3-methacrylyl-2-oxazolidone, 3-methacrylyl-5-methyl-2-oxazolidone, 3-vinyl-5-methyl-2-oxazolidone, 2-and 4-vinylyridine, 5-vinyl-2-methylpyridine, 2-vinylpyridine-1-oxide, 3-isopropenyl-pyridine, 2- and 4-vinylpiperidine, 2- and 4-vinylquinoline, 2,4-dimethyl-6-vinyl-a-triazine and 4-acrylylmorpholine.

Preferred among the water-soluble monomers are N-vinyl-2-pyrrolidone, 2-vinylpyridine, 4-vinylpyridine, 2-(dimethylamino)ethyl methacrylate, N-methacrylamide, N,N-dimethylacrylamide, acrylic acid and methacrylic acid or mixtures thereof.

Most preferred water-soluble comonomers are: 2-hydroxyethyl acrylate and methacrylate, acrylic- and methacrylic acid; 2-dimethylaminoethyl methacrylate; N,N-dimethylacrylamide and N-vinyl-2-pyrrolidone.

(b) <u>The Divinyl or Polyvinyl Crosslinking Agent</u>

The insoluble di- or polyacrylates and methacrylates of diols and polyols, such as: linear or branched aliphatic diols such as ethylene glycol, 1,2-propylene glycol, 1,6-hexanediol, 1,4-butanediol, 1,4-butenediol, 1,4-butynediol; diethylene glycol; dipropylene glycol, di-pentylene glycol; polyethylene oxide glycol; polypropylene oxide-glycol, polytetramethylene-oxide glycol; poly-(ethylene oxide-co-propylene-oxide) glycol; thiodiethylene glycol; the reaction-product of a diisocyanate (aliphatic, cycloaliphatic and aromatic) with twice the equivalent amount of hydroxyalkyl acrylates or methacrylates; the reaction products of isocyanate terminated prepolymers derived from poly-ester diols, poly-ether diols or polysiloxane diols as shown in the art of polyurethane technology, with from 500-10,000 MW, with twice the equivalent amount of hydroxyalkyl methacrylates. Other such di- and polyvinyl-crosslinking agents, including divinyl ethers and di-allyl compounds are described in U.S. 4,192,827, useful polysiloxane-di and polyvinyl compounds are described in U.S. 4,136,250. The appropriate portions of said patents are incorporated herein by reference.

Examples of such crosslinking agents include: trimethylolpropane triacrylate, neopentylglycol diacrylate, pentaerythritol and dipentaerythritol di-, tri-, tetra-, penta-, hexa-acrylates; ethylene glycol and diethylene glycol acrylates, divinyl ether; divinylbenzene; allyl methacrylate; diallyl maleate; diallylamine; divinyl sulfone; triallyl cyanurate.

Such a crosslinking agent is a terminal diolefinic hydrophobic macromer having a molecular weight from about 400 to about 8000, said macromer having the formula

$$H\overset{R_3}{C}=\overset{R_2}{C}-X-Y-R_1-Y-X-\overset{R_2}{C}=\overset{R_3}{C}H$$

wherein $R_1$ is a polycondensate chain having a molecular weight from about 200 to about 8000, which is the residue of a poly(propylene oxide) or poly(tetramethylene oxide) glycol having ether linkages; $R_2$ is hydrogen, methyl or $-CH_2COOR_4$, wherein $R_4$ is hydrogen or an alkyl group with up to 10 carbon atoms; $R_3$ is hydrogen or $COOR_4$, with the proviso that at least one of $R_2$ and $R_3$ is hydrogen; X is oxa, $-COO-$, or $-CONR_5-$, wherein $R_5$ is hydrogen or alkyl with up to 5 carbon atoms and Y is a direct bond or the radical $-R_6-Z_1-CO-NH-R_7-NH-CO-Z_2-$, wherein $R_6$ is linked to X and represents branched or linear alkylene with up to 7 carbon atoms; $Z_1$ and $Z_2$ is oxa or NR5 and $R_7$ is the diradical of an aliphatic or aromatic diisocyanate, with the proviso that in case X is oxa, Y is different from a direct bond and $R_2$ and $R_3$ are hydrogen.

Preferably $R_1$ is a poly(propylene oxide) or poly(tetramethylene oxide) chain with a molecular weight of about 600 to about 4,000. Preferably the macromer is a polytetramethyleneoxide glycol with a molecular weight of about 600 to about 4000, endcapped with toluene

or isophorone diisocyanate and reacted with 2 moles of a hydroxyalkyl acrylate or methacrylate, wherein alkyl has 2 to 4 carbon atoms.

Other preferred crosslinking agents include the $C_2$-$C_6$ alkylene diacrylates or methacrylates, 3-oxapentamethylene diacrylate, 3-oxapentamethylene dimethacrylate and trimethylolpropane triacrylate, or mixtures thereof.

The amount of crosslinking agent can vary from 1 to 50 % by weight, but should not contribute more than 20 mol. % of the total monomer mixture. Preferred crosslinking agents are ones with a molecular weight from 500-5,000, containing polyalkylene ether units, especially as described in U.S. 4,192,827.

A particularly preferred embodiment of the instant invention are those compositions where the copolymer (A) is the copolymerization product of 85-99 % of component (a) and 15-1 % of component (b), where (a) is 15-50 % by weight of methyl methacrylate, 15-70 % by weight of 2-ethylhexyl acrylate, n-butyl acrylate or n-octyl acrylate, 5-15 % by weight of N-vinyl-2-pyrrolidone and 0-25 % by weight of 2-hydroxyethyl methacrylate.

The Inert Diluent

The inert diluent present during polymerization can be any organic liquid which will clearly dissolve in the monomer mixture. However, it need not be a solvent for the polymer and can vary in its solvent power from a thermodynamically good solvent for monomers and polymers to a thermodynamically poor solvent for the polymer.

Inert diluents which are thermodynamically good solvents for the monomers, but poor solvents for the copolymer are commonly used in the preparation of macroporous ion-exchange resins which are copolymers of styrene and divinylbenzene. The preparation of macroporous hydrogels according to the same principle is described

in DDR 66283 and U.S. 4,184,020. In all cases the objective was to prepare macroporous hydrogels for gel chromatography or gas chromatography, and none have been used in oral drug-delivery applications. This is understandable since due to their high hydrophilicity the release-rate would be impractically fast.

The use of inert diluents which are thermodynamically good solvents for both the monomers and the resulting copolymers, results in microporous polymers of increased distances between crosslinks (expanded gel structure) comparable to the microporous, homogeneous structure of polymers prepared in absence of such diluents.

A preferred embodiment of the instant invention pertains to compositions prepared with the use of inert diluents which are good solvents for the monomers and which vary from good to poor in solvent power for the copolymers. Thus copolymer with a selected range of microporous to macroporous structures can be prepared by choosing the diluent used. The structure desired in turn is dictated by the solubility characteristics of the drug to be imbibed as well as its dose size.

If the diluent is a good solvent for the polymer, the product is obtained with a network structure which is a microreticular, that is microporous, in nature. This structure is comparable to the one obtained in the absence of solvent when the polymerization is carried out in bulk, but differs from it by a more extended and open network structure as a result of the good solvent present. If, on the other hand, the diluent is only a solvent for the monomer, but is a non-solvent or precipitant for the polymer, the product is obtained with a macroporous or macroreticular structure which is 2-phase (gas - polymer) in nature. Although the extremes of both possibilities can be well distinguished from each other, intermediate grades of micro- and macroreticular polymers form a continuum between them.

The solvent power and the solubility parameter of the diluent are commonly a function of its chemical nature, like the degree of hydrogen bonding, polar- and non-polar interactions, presence of hetero atoms and, generally, of the degree of similarity of the diluent to the monomer which is used. The effect of phase separation during polymerization in the presence of an inert diluent is enhanced by an increase in crosslink-density. To choose the right diluents and the right amount of crosslinking agent to get a micro- or macroreticular structure is a task easily performed by anyone skilled in the art of polymer chemistry and especially the art of making ion-exchange resins.

Another group of diluents which are very poor solvents for the polymer formed are other polymers. It is well known that two different polymers will essentially not dissolve in each other due to the extremely low heat of mixing. Therefore, while polymeric diluents can dissolve in the monomer mixture, during polymerization phase-separation between both polymers occurs. After extraction of the inert polymeric diluent, a product is obtained with an extended network structure which is likely to be more macroreticular than microreticular in nature. Such polymeric diluents, like poly-alkylene ether glycols or polyesters are especially preferred in the context of this invention.

Useful low molecular weight diluents are: ester, such as ethyl acetate; butyl cellosolve acetate; butyl acetate; isobutyl acetate; methyl cellosolve acetates; ethers, such as methyl phenyl ether; tetrahydrofuran; alcohols, such as ethanol; isopropanol; n-, iso- and tert-butanol; lauryl alcohol; octanol; decanol; dodecanol; butyl cellosole; ethyl cellosolve; butyl alcohol; cyclohexanol. Ketones, such as methyl ethyl ketone; methyl iso-butyl ketone; amides, such as dimethylformamide; formamide; acetamide; dimethylacetamide. Dimethyl sulfoxide. Sulfolane. N-methyl-2-pyrrolidone. Also useful are hydrocarbons such as hexane, heptane, cyclohexane or halogenated hydrocarbons like tetrachloroethylene, trichloroethane or trichloroethylene.

Preferred inert diluents are polyalkylene ether glycols, such as polyethylene oxide glycol, polypropylene oxide glycol and poly-n-butyleneoxide glycol, and block-copolymers thereof, octanol, decanol, dodecanol, heptane, or isobutyl acetate.

The Active Ingredient

Any agricultural chemical or active ingredient used to obtain a selected physiological or biological response in the broadest agricultural context can be incorporated as the active ingredient in the copolymeric carrier of this invention. "Active agricultural ingredient" is used in that broadest sense as including any composition of matter that will produce the desired "agricultural" response. Suitable mixtures of such agricultural chemicals or ingredients can be used with equal facility as single component systems.

The amount of agricultural chemical incorporated in the carrier varies widely depending on the particular chemical, the desired agricultural effect, and the time span for which it takes the chemical to be released.

On contact of the instant compositions with water or an aqueous environment, the controlled release of the agricultural chemical occurs. This can be taken advantage of in applying pesticides to the soil. For example, the entrapped pesticide can be applied in the dry form to the top of the soil or it can be embedded in the soil and will be released as a result of rain or artificial watering.

Usually 0.1 to 3.5 % of the active material is employed based on the weight of the crosslinked copolymer.

The agricultural chemicals can include pesticides including bactericides, fungicides, insecticides and nematocides, herbicides or fertilizers.

Examples of bactericides include -

trimethylbenzylammonium chloride,
cetylpyridinium chloride,
hexachlorophene,
streptomycin,
salicylic acid,
penicillin,
aureomycin,
chloromycetin,
merthiolate,
sulfanilamide,
sulfathiazole,
fungicides including methyl-1-(butylcarbamoyl)-2-benzimidazole carbamate,
N-trichloromethylthio-4-cyclohexene 1,2-dicarboximide,
methyl mercury 2,3-dihydroxypropyl mercaptide,
methyl mercury acetate,
N-(ethylmercury)-p-toluenesulfonanilide,
chloranil,
1,4-dichloro-2,5-dimethoxybenzene
copper carbonate,
copper oleate
basic cupric chloride,
cuprous oxide
3-[2-(3,5-dimethyl-2-oxocyclohexyl)-2-hydroxyethyl]glutarimide,
2,4,5,6-tetrachloroisophthalonitrile,
tetrahydro-3,5-dimethyl-2H-1,3,5-thiadiazine-2-thione,
2,6-dichloro-4-nitroaniline,
p-dimethylaminobenzenediazo sodium sulfate,
bis(n-propylsulfonyl) ethylene (B-1843).
2,3-dichloro-1,4-naphthoquinone,
cis-N-[(1,1,2,2-tetrachloroethyl)thio]-4-cyclohexene-1,2-dicarboximide

coordination product of zinc and manganese ethylene bisdithiocarbamate (Dithane M-45), mixture of nickel sulfate and manganese ethylene bis [dithiocarbamate (Dithane S-31), dodecylguanidine]acetate,

2,4-dichloro-6-(o-chloroanilino)-s-trizine,
sodium ethylmercurithiosalicylate 3,4,5,6,7,7-hexachloro-N-(ethyl mercuri)-1,2,3,6-tetrahydro-3,6-endomethanophthalimide, ferric dimethyl dithiocarbamate,
N-(trichloro-methylthio) phthalimide,
2-heptadecyl-imidazoline acetate,
Griseofulvin,
hexachlorobenzene,
1-chloro-2-nitropropane,
manganous ethylene bis carbamate,
3,4,5,6,7,7-hexachloro-N-(methylmercury)-1,2,3,6-tetrahydro-3,6-endo-methanophthalimide,
mercuric chloride,
sodium methyldithiocarbamate,
6-methyl-2,3-quinoxalinedithiol cyclic-S,S-dithiocarbonate (also mites) disodium ethylenebisdithiocarbamate,
manganese dimethyl dithiocarbamate and mercaptobenzothiazole mixture (Niacide),
methyl mercury 8-hydroxyquinoline,
2-phenylphenol,
methyl mercury dicyandiamide,
phenylmercuritriethanolammonium lactate,
pentachloronitro-benzene,
phenylmercury urea,
3-(2-methyl)-piperidino)propyl 3,4-dichlorobenzoate,
2,3-dihydro-5-carboxinilido-6-methyl-1,4-oxathiin-4-dioxide,
phenylmercuric acetate,
Polyram,
8-hydroxyquinoline sulfate,
hydroxymercuri-nitrophenol and hydroxymercurichlorophenol mixture,
sulfur,

5-ethoxy-3-trichloromethyl-1,2,4-thiadiazole,
1,2,4,5-tetrachloro-3-nitrobenzene,
bix(dimethylthiocarbamoyl) disulfide,
3,5,6-trichloro-o-anisic acid,
triphenyltin hydroxide,
2,3-dihydro-5-carboxanilido-6-methyl-1,4-oxathiin,
zinc ethylene bisdithiocarbamate,
zinc dimethyl dithiocarbamate and lauryl isoquinolium bromide

Insecticides (or miticides) including

0,0,0'0'-tetramethyl 0,0'-thiodi-p-phenylene phosphorothioate,
isopropyl 4,4'-dichloro-benzilate,
0-[2-chloro 1-(2,5-dichlorophenyl)-vinyl]0,0-diethyl phosphorothioate,
aldrin,
allethrin,
0,0,0,0-tetrapropyl dithiopyrophosphate,
0,0-diethyl-s-[4-oxo-1,2,3-benzotriazin-3(4H)-ylmethyl]phosphorodithioate,
dimethyl phosphate of 3-hydroxy-N-methyl-ciscrotonamide,
2-isopropoxyphenyl N-methylcarbamate,
benzene hexachloride (BHC),
dimethyl phosphate of 3-hydroxy-N,N-dimethyl-ciscrotonamide,
2-sec.butyl-4,6-dinitrophenyl-3-methyl-2-butanoate,
dimethyl 3-hydroxyglutaconate dimethyl phosphate,
dimethyl (2,2,2-trichloro-1-hydroxyethyl)phosphorate ester of butyric acid,
m-(1-methyl-butyl)phenylmethylcarbamate,
m(1-ethylpropyl)phenylmethylcarbamate,
calcium cyanide,
1-naphthyl N-methylcarbamate,
2,3-dihydro-2,2-dimethyl-7-benzofuranyl methyl carbamate,
S-[(p-chlorophenylthio)methyl]0,0-diethyl phosphorodithioate,
m[[(dimethylamino)methylene]amino]phenyl methyl-carbamate hydrochloride,

chlordane,
ethyl 4,4'-dichlorobenzilate,
N,N-dimethyl-N'(2-methyl-4-chlorophenyl)-formamidine,
dimethyl phosphate of α-methylbenzyl 3-hydroxy-cis-crotonate,
0,0-diethyl-0-3-chloro-4-methyl-2-oxo-2H-1-benzo-pyran-7-ryl-phosphorothioate, cyclic ethylene (diethoxyphosphinyl)dithiomido carbonate,
1,1-dichloro-2,2-bis(p-chlorophenylethane,
DDT (1,1,1-trichloro-2-bis(p-chlorophenyl) ethane),
Demeton (mixture of 0,0-diethyl-0-[2-ethylthio)ethyl] phosphorothioate and 0,0-diethyl-S-[2-ethylthio)ethyl] phosphorothioate),
0,0-dimethyl-0-(2,2-dichlorovinyl)phosphate (DDVP),
0,0-diethyl 0-(2-isopropyl-(o-methyl-4-pyrimidyl) phosphorothioate,
0-2-chloro-4-nitrophenyl 0,0-diethyl phosphorothioate,
Dieldrin,
2-nitro-1,1-bis(p-chlorophenyl) butane,
2-nitro-1,1-bis-(p-chlorophenyl) propane,
tetramethylphosphorodiamidic fluoride,
2,4-dimethylbenzyl 2,2-dimethyl-3-(2-methyl propenyl) cyclopropanecarboxylate,
4,4'-dichloro-α-methylbenzhydrol (primarily an acarcide and miticide),
4,6-dinitro-o-cyclohexylphenol,
2-sec-butyl-4,6-dinitrophenyl isopropyl carbonate (miticide),
2,3-p-dioxanedithiol-S,S-bis(0,0-diethyl phosphorodithioate),
diphenylamine,
0,0-diethyl-S-[2-ethylthio)-ethyl]phosphorodithioate,
0,0-diethyl-0-(3,5,6-trichloro-2-pyridyl) phosphorothioate,
0-ethyl-S-phenyl-ethylphosphonodithioate 6,7,8,9,10,10-hexachloro-1,5,5a,6,9,9a-hexahydro-6,9-methano-2,4,3-benzodioxathiepin-3-oxide,
Endrin,
0-ethyl-0-p nitrophenyl phenylphosphonothioate,
2,3-quinoxaline-dithiol cyclic trithiocarbamate (ovicide for spider mites),
0,0,0',0'-tetraethyl S,S'-methylene bisphosphoro-dithioate (mites),

0,0-dimethyl-0-[4-methylthio) m-tolyl]-phosphoro-thioate,

2-chloro-1-(2,4,5-trichlorophenyl) vinyl dimethyl phosphate,

2,4-dichlorophenyl ester of benzene sulfonic acid,

Heptachlor,

hydroxymercurichlorophenyl,

N-(mercaptomethyl)phthalimide S-(0,0-dimethyl phosphorodithioate),

2-(1-methylheptyl) 4,6-dinitrophenyl crotonate,

decachlorooctahydro-1,3,4-metheno-2H-cyclobuta[cd] pentalen-2-one,

2,3,5-trimethylphenyl carbamate,

3,4,5-trimethylphenyl carbamate,

dibasic lead arsenate,

β-butoxy-β'-thiocyanodiethyl ether,

1,2,3,4,5,6-hexachlorocyclohexane gamma isomers

5,6-dichloro-2-trifluoromethyl-3-azimidazole-1-carboxylate (mites),

0,0-dimethyl phosphoro-dithioate of diethyl mercapto-succinate,

4-(dimethylamino)-m-tolyl methylcarbamate,

0,0-diethyl-S-(N-ethoxycarbonyl-N-methyl-carbamoylmethyl)phosphorothiolothionate,

S-(4,6-diamono-s-triazine-2-ylmethyl)0,0-dimethyl phosphorodithioate,

4-(methylthio)-3,5-xylylmethylcarbamate,

S-methyl-N-[(methylcarbamoyl)-oxy]thioacetamidate,

2,2-bis (p-methoxyphenyl)-1,1,1,-trichloroethane (Methoxychlor),

bromomethane,

0-[2-(Ethylthio)ethyl] 0,0-dimethylphosphorothioate (Meta Systox),

0,0-dimethyl-0-p-nitrophenylphosphorothioate,

S-[[(p-chlorophenyl)thio]methyl]0,0-dimethyl phosphorodithioate,

3-(p-bromophenyl)-1-methoxy-1-methylurea,

2-carbomethoxy-1-methylvinyl dimethyl phosphate isomer

4-benzothienyl-N-methyl carbamate,

0,S-dimethyl phosphoramidi-thioate,

1,2-dibromo-2,2-dichloroethyl dimethyl phosphate,

naphthalene,

2,2-dimethyl-3-(2-methylpropenyl) cyclopropane-carboxylic ester of N-(hydroxymethyl)-1-cyclohexene 1,2-dicarboximide,

nicotine (3-(1-methyl-2-pyrrolidyl)pyridine,

O-dichlorobenzene,
p-chlorophenyl-p-chlorobenzenesulfonate (mites),
p-dichlorobenzene,
O,O-diethyl-O-p-nitro-phenyl phosphorothioate (Parathion),
copper meta-arsenic copper acetate complex (Paris green),
decachlorobis(2,4-cyclopentadiene-1-yl) (mites),
1,1-dichloro-2,2-bis(p-ethylphenyl)ethane,
dibenzo-1,4-thiazine,
O,O-diethyl S-(ethylthio)-methyl phosphorodithioate,
2-chloro-2-diethylcarbamoyl-1-methylvinyl dimethyl phosphate,
Piperonyl butoxide,
O-ethyl S,S-dipropyl phosphorodithioate,
pyrethrins,
O,O-dimethyl-O-(2,4,5-trichlorophenyl) phosphorothioate,
rotenone,
4-t-butyl-2-chlorophenyl O-methyl methylphosphoroamidate,
ryanodine,
sabadilla,
(5-benzyl-5-furyl)
methyl-2,2-dimethyl-3-(2-methylpropenyl)-cyclopropanecarboxylate,
octamethylprophosphoramide,
sodium fluoride,
6 (and 2)-chloro-3,4-xylylmethylcarbamate,
polychlorinated (66 % Cl) terpene,
p-chlorophenyl phenyl sulfone (mites),
O,O-dimethyl O-(4-nitro-m-tolyl)-phosphorothioate,
2-methyl-2-(methylthio) propionaldehyde O-(methylcarbamoyl) oxime,
tetraethyl pyrophosphate,
4-chlorophenyl 2,4,5-trichlorophenyl sulfone,
isobornyl thiocyanoacetate,
chlorinated (67-69 %) camphene,
O,O-dimethyl (2,2,2-trichloro-1-hydroxyethyl) phosphonate and
O,O-diethyl-O-(2-pyrazinyl)phosphorothioate.

Herbicides including

2-(ethylamino)-4-(isopropylamino)-6-(methylthio)-s-triazine,
3-amino-2,5-dichlorobenzoic acid,
3-amino-1,2,4-triazole,
ammonium sulfamate,
2-triazine,
2-chloro-4-ethylamino-6-isopropylamino-s-triazine,
polychlorobicyclopentadiene,
4-chloro-2-butynyl-m-chlorocarbanilate,
N-butyl-N-ethyl-α,α,α-trifluoro-2,6-dinitro-p-toluidine,
S-(O,O-diisopropyl phosphoroidithionate) ester of N-(2-mercaptoethyl)benzenesulfonamide,
methyl m-hydroxycarbanilate m-methyl carbanilate,
3,5-dibromo-4-hydroxybenzonitrile,
S-ethyl diisobutylthiocarbamate,
N,N-diallyl-2-chloroacetamide,
2-chloroallyl diethyldithiocarbamate,
3-[p-(p-chlorophenoxy)phenyl]-1,1-dimethylurea,
isopropyl m-chlorocarbanilate,
calcium methanearsonate,
p-chlorophenoxy acetic acid,
S-ethyl-N-ethyl-N-cyclohexylthiocarbamate,
3',4'-dichlorocyclopropanecarboxanilide,

2,4-dichlorophenoxy acetic acid and its salts, e.g. butylamine salt, and esters, e.g. isooctyl ester, 2,4,5-trichlorophenoxy acetic acid and its salts and esters, 2,2-dichloropropionic acid, 4-(2,4-dichlorophenoxybutyric acid its salts, amine salts and esters

dimethyl-2,3,5,6-tetrachlorophthalate,
1,3-bis(1-hydroxy-2,2,2-trichloroethyl) urea,
tris[(2,4-dichlorophenoxy)ethyl] phosphite,

S-2,3-dichloroallyl diisopropylthiocarbamate,

3,6-dichloro-o-anisic acid,

2,6-dichlorobenzo-nitrile,

2-(2,4-dichlorophenoxy) propionic acid,

N,N-dimethyl-2,2-diphenylacetamide,

diphenyl-acetonitrile,

3-(3,4-dichlorophenyl)-1,1-dimethylurea,

2-methyl-4,6-dinitrophenol sodium salt,

disodium methanearsonate,

ethylene glycol bis(trichloroacetate),

7-oxabicyclo (2,2,1) heptane-2,3-dicarboxylic acid,

S-ethyl dipropylthiocarbamate,

2-(2,4,5-trichlorophenoxy) ethyl 2,2-dichloropropionate,

diethyl dithiobis(thionoformate),

2,3,6-trichlorophenylacetic acid or sodium salt,

3-phenyl-1,1-dimethylurea,

3-phenyl-1,1-dimethylurea trichloroacetate,

1,1-dimethyl-3($\alpha$,$\alpha$,$\alpha$-trifluoro-m-tolyl) urea,

2-t-butylamino-4-ethylamino-6-methylthio-s-triazine,

3,5-diiodo-4-hydroxybenzonitrile,

hexachloroacetone,

5-bromo-3-sec-butyl-6-methyluracil,

potassium cyanate,

2-chloro-2',-6'-diethyl-N-(methoxymethyl) acetanilide,

3-cyclohexyl-6,7-dihydro-1H-cyclopentapyrimidine-2,4(3H,5H)-dione,

3-(3,4-dichlorophenyl)-1-methoxy-1-methylurea,

3-(4-bromo-3-chlorophenyl)-1-methoxy-1-methylurea,

mono ammonium methyl arsenate, 2-methyl-4-chlorophenoxyacetic acid and its salts and esters, 4-(2-methyl-4-chlorophenoxy) butyric acid and its salts and esters, 2-(2-methyl-4-chlorophenoxy) propionic acid and its salts and esters,

1,2-dihydro-3,6-pyridazinedione,

S-ethyl hexahydro-1H-azepine-1-carbothioate,

3-(p-chlorophenyl)-1,1-dimethylurea,

3-(4-chlorophenyl)-1,1-dimethylurea trichloroacetate,

2,4-bis[(3-methoxypropyl)-amino]-6-methylthio-s-triazine
monosodium acid methanearsonate,
N-1-naphthylphthalamic acid,
1-butyl-3-(3,4-dichlorophenyl)-1-methylurea,
ethyl hydrogen 1-propyl phosphonate,
4-(methylsulfonyl)-2,6-dinitro-N,N-dipropylaniline,
2,4-dichlorophenyl-p-nitrophenyl ether,
3-(hexahydro-4,7-methanoinden-5-yl)-1,1-dimethylurea,

1,1'-dimethyl-4,4'-bipyridinium dichloride or the corresponding bis(methyl sulfate), dimethylamine salt of polychlorobenzoic acid (PBA).

pentachlorophenol,
S-propyl butylethylthiocarbamate,
4-amino-3,5,6-trichloropicotinic acid,
2,4'-dinitro-4-trifluoromethyldiphenyl ether,
2,4-bis(isopropylamino)-6-methoxy-s-triazine,
2,4-bis(isopropylamino)-6-methylthio)-s-triazine,
2-chloro-N-isopropylacetanilide,
3,4-dichloropropionanilide,
2-chloro-4,6-bis(isopropylamino)-s-triazine,
isopropyl N-phenylcarbamate,
5-amino-4-chloro-2-phenyl-3(2H)-pyridazinone,
sodium 2-(2,4-dichlorophenoxy)-ethyl sulfate,
1-(2-methylcyclohexyl)-3-phenylurea,

2-(2,4,5-trichlorophenoxy) propionic acid and its salts and esters, 2-chloro-4,6-bis(ethylamino)-s-triazine, sodium arsenite, sodium chlorate,

3'-chloro-2-methyl-p-valerotoluidine,
m-(3,3-dimethylureido) phenyl t-butylcarbamate,
dimethylamine salt of 2,3,6-trichlorobenzoic acid,
2,3,6-trichlorobenzyloxypropanol,
trichloroacetic acid,

trichlorobenzyl chloride,
3-t-butyl-5-chloro-6-methyluracil,
2,6-di-t-butyl-p-tolylmethylcarbamate,

S-2,3,3-trichloroallyl-diisopropyl thiolcarbamate
α,α,α-trifluoro-2,6-dinitro-N,N-dipropyl-p-toluidine
and propyl dipropylthiolcarbamate,

Nematocides, including chloropicrin (trichloronitromethane), O,O-diethyl O[o-(methylsulfinyl)phenyl] phosphorothioate, 1,2-dibromo-3-chloropropane, D,D (mixture of 1,3-dichloropropene, 3,3-dichloropropene, 1,2-dichloropropane and 2,3-dichloropropene), 1,2-dibromoethane, O-2,4-dichlorophenyl, O,O-diethylphosphorothioate, 3-bromo-1-propyne, and tetrachlorothiophene. Defoliants and desiccants such as arsenic acid, dimethyl arsinic acid, calcium cyanamide, S,S,S-tributyl phosphorotrithioate, 4,6-nitrophenol-O-sec. butylphenol, 6,7-dihydrodipyrido [1,2a: 2',1'c] pyrazinedium salts, S,S,S-tributyl phosphorotrithioite and magnesium chlorate; snail and lanprey controls, e.g. 2',5-dichloro-4'-nitrosalicylanilide,

Synthesis of the Copolymer

The copolymers of this invention are synthesized by free-radical initiated polymerization, using either redox-catalysts, peroxy compounds or azo compounds; typical initiators include lauroyl peroxide, tert.-butyl peroctoate and azo-bisisobutyronitrile. As known to those skilled in the art, many different peroxy- and azo compounds are commercially available and can be used. Free radical polymerization can also be UV-initiated in the presence of commonly used UV-initiators and sensitizers such as benzophenone, benzoin, diethyoxyacetophenone (DEAP) and related compounds. Electron-beam radiation can be used if the polymer are made in form of films, coating or sheets.

The polymers are synthesized in form of beads by suspension polymerization process in an aqueous medium. To reduce the solubility of water-soluble comonomers present, the medium is preferably an inorganic salt solution, usually concentrated sodium chloride solution. As suspending agents can be used either polymeric suspending agents such as poly(vinyl pyrrolidone), poly(vinyl alcohol) or poly(hydroxyethyl cellulose), or inorganic, insoluble salts such as calcium phosphate, calcium oxalate, calcium carbonate, calcium sulfate or magnesium phosphate, or the insoluble hydroxides such as $Mg(OH)_2$, $Al(OH)_3$ or $Ti(OH)_4$. A process which can be used to make the polymers of this invention in form of beads is described in U.S. 4,224,427. After synthesis the polymer beads are thoroughly extracted with ethanol or ethanol/water mixtures or other suitable solvents and dried to constant weight. The polymers of this invention can also be manufactured by bulk polymerization methods in form of sheets, films or shapes.

In form of shapes, rods, films or sheets and coatings the instant copolymer can also be made by casting and thermally or UV-initiated polymerization.

The polymers after synthesis are characterized by their degree of swelling in water and ethanol, by their ability to imbibe an active ingredient and the release of this ingredient into an aqueous environment, as described in detail in the examples.

<u>Preparation of the Active Ingredient-Containing Composition</u>

After drying, the polymer beads are imbibed with a chosen active ingredient. As solvent for imbibing the ingredient, any solvent which will (a) dissolve the ingredient, (b) swell the polymers, and (c) can be quantitatively removed can be used. These are preferably low boiling solvents like methanol or ethanol, methylene chloride, acetone or mixtures of such solvents. Aqueous alcoholic solutions are also suitable. The best choice of solvents will depend on the

solubility of the ingredient and on the desired level of loading. In general, however, it is seen, that for many water-soluble ingredients, ethanol is also a good solvent and the high ethanol swelling capability of the polymers of this invention makes high ingredient-loadings from ethanol solutions possible and preferred.

Especially high loading are obtained with certain ingredients when the polymer-synthesis is carried out in presence of an inert diluent.

To load the copolymer with an active ingredient, the copolymer is equilibrated in a solution of said active ingredient in ethanol, methanol or other organic solvent or a mixture of such solvents which may also contain water. Subsequently the solvent is driven off by drying in heat or vacuo.

It has further been discovered that especially high ingredient-loadings can be achieved if the polymerization is carried out in presence of an inert diluent which results in a final polymer of increased pore size and which copolymer therefore is capable of absorbing even higher amounts of solvent and ingredient.

Ingredient-loaded compositions, in which the polymer is obtained in the presence of such inert diluents as poly-(propylene glycol), decanol or dodecanol are thus a preferred embodiment of the present invention. Despite high ingredient-loadings, beads treated in this manner show a prolonged and delayed release.

Agricultural chemical-loaded polymers having 30-70 % of their total hydrophobic monomer composition derived from $C_4$-$C_{21}$ alkyl substituted monomers are an especially preferred embodiment of this invention.

It has furthermore been found unexpectedly that use of polymeric inert diluents during the synthesis of the polymer beads of the instant invention gave after extraction beads with a specifically

modified network structure which resulted in unexpectedly good ingredient-release characteristics, especially the elimination of excessive tailing.

The polymers of this invention are exceptionally well suited as agricultural chemical carriers when their gel-structure is expanded by use of an inert diluent during synthesis, and contain at least 25 % by weight of residues derived from a monomer which is an alkyl acrylate and/or alkyl methacrylate having 4 to 10 carbon atoms in the alkyl group.

In the following examples the degrees of swelling in water or ethanol are expressed as percent of water or of ethanol in the swollen polymer, namely:

$$\text{DS in water or ethanol(\%)} = \frac{\text{weight of swollen polymer} - \text{weight of dry polymer}}{\text{weight of swollen polymer}} \times 100$$

The swelling ratio for a polymer is defined as the ratio % ethanol : % water.

In the following examples MAC refers to a difunctional crosslinking agent obtained by reaction of 2 mols isophorone diisocyanate with 1 mol poly-n-butyleneoxide diol of 2000 averagemolecular weight, followed by end-capping with 2 moles 2-hydroxyethyl methacrylate.

The following abbreviations are used:

HEMA: 2-hydroxyethyl methacrylate
NVP: N-vinyl-2-pyrrolidone
MMA: methyl methacrylate
EHA: 2-ethylhexyl acrylate
BA: butyl acrylate
t-OCT: tert.-octylmethacrylamide
(= 1,1,3,3-tetramethylbutylmethacrylamide)

DMA: dimethylacrylamide

MAC: macromer (B) as prepared in Example 1

GMA: glycidyl methacrylate

Example 1: Synthesis of Polymer Beads by Suspension Polymerization

A smooth wall, 1,000-ml resin flask is equipped with a reflux condenser, nitrogen-inlet tube, thermometer attached to a thermoregulator, baffle and anchor-type stirrer driven by a variable speed motor. A slow flow of nitrogen is maintained through the reaction flask at all times.

To the flask are charged 360 grams of 20 % by weight aqueous sodium chloride solution followed by 12.5 grams (0.0615 moles), of magnesium chloride-hexahydrate. The solution is heated slowly to 80° with rapid stirring. To this solution is then added dropwise 123 ml (0.123 moles) of a 1-normal sodium hydroxide solution to form a fine, gelatinous precipitate of magnesium hydroxide in the reaction flask.

After all the sodium hydroxide is added, the stirring speed is reduced to 100 rpm and a mixture of 42 g 2-hydroxyethyl methacrylate, 110 g methyl methacrylate and 24 g N-vinylpyrolidone and 24 g macromer (b) containing dissolved therein 0.2 gram of tert-butyl peroctoate as a free radical polymerization initiator is added. [The macromer (b) is prepared by dissolving 60 grams (ca. 0.024 moles) of a poly-(tetramethylene oxide)-glycol (average molecular weight of 2,000) endcapped with isophorone diisocyanate (= 3-isocyanatomethyl-3,5,5-trimethylcyclohexyl isocyanate) in 40 grams (0.31 moles) of 2-hydroxyethyl methacrylate (HEMA) and allowing said mixture to react for 72 hours at room temperature. AT the end of this period the disappearance of the terminal isocyanate groups is verified by noting the absence of the characteristic infrared spectral band at 2270 $cm^{-1}$ associated with the -NCO group.]

The reaction mixture is stirred under nitrogen at 100 rpm and at 75°C for three hours. The temperature is then raised to 100°C for 1 hour after which time the flask is cooled to room temperature. 10 ml of concentrated hydrochloric acid are then added to dissolve the magnesium hydroxide suspending agent. The reaction mixture is then filtered through fine cheesecloth. The isolated product beads are washed with 2,000 ml of water and soaked overnight in 500 ml of ethanol to extract any residual monomer. The beads are then isolated by filtration through a polyester cloth bag, which is then sewn closed, and dried in a home clothes dryer. Uniform spherical beads are obtained in a yield of 184 g (92.7 %) which have an average diameter of 0.98 mm and exhibit a percent swelling in water of 16 % and in ethanol of 38 %.

The following examples demonstrate the unique swelling properties (high % ethanol / % water ratio; % $H_2O$ > 1 %) of the polymers.

Examples 1-12: Using the procedure of Ex. 1 beads with the following compositions and physical properties were synthesized.

| Ex. No. | Compositions (% by weight) Comonomers A: Hydrophobe ($A_1$) MMA | BA | EHA | t-OCT | Hydrophile ($A_1$) HEMA | NVP | DMA | Cross-Linker (B) MAC % | Bead Size (mm) | % Swelling in Ethanol | % Swelling in Water | Swelling Ratio (%/% % Eth./% $H_2O$ |
|---|---|---|---|---|---|---|---|---|---|---|---|---|
| 1 | 55 | - | - | - | 21 | 12 | - | 12 | 0.98 | 38 | 14 | 2.7 |
| 2 | 27.5 | - | 27.5 | - | 21 | 12 | - | 12 | 1.05 | 60 | 11 | 5.5 |
| 3 | 27.5 | - | 27.5 | - | 21 | - | 12 | 12 | 0.96 | 63 | 12 | 5.2 |
| 4 | 27.5 | 27.5 | - | - | 21 | 12 | - | 12 | 1.07 | 58 | 10 | 5.8 |
| 5 | 27.5 | - | - | 27.5 | 21 | - | 12 | 12 | 0.85 | 70 | 9 | 7.8 |
| 6 | 15 | - | 40 | - | 21 | 12 | - | 12 | 1.20 | 50 | 11 | 4.5 |
| 7 | 40 | - | 13 | - | 21 | 12 | - | 12 | 1.04 | 64 | 12 | 5.3 |
| 8 | 35 | - | 35 | - | 8 | - | 10 | 12 | 1.05 | 58 | 3 | 19.9 |
| 9 | 18 | 50 | - | - | 8 | - | 12 | 12 | 1.00 | 62 | 9 | 6.9 |
| 10 | 22 | 40 | - | - | 21 | 5 | - | 12 | 1.12 | 62 | 10 | 6.2 |
| 11 | - | - | - | 55 | 8 | - | 25 | 12 | 1.26 | 71 | 17 | 4.2 |
| 12 | - | - | - | 55 | 21 | 12 | - | 12 | 0.84 | 70 | 12 | 5.8 |

Example 13: The procedure of Example 2 is repeated, but instead of methyl methacrylate, 27.5 % isobornyl methacrylate is used. Colorless beads are obtained with 0.97 mm average diameter with a degree of swelling of in Ethanol = 58 %, in water 8 % and with the swelling ratio of 7.2.

Example 14-15: Following the procedure of Example 1, beads containing 21 % HEMA, 12 % MAC crosslinking agent and 67 % of the listed comonomers are prepared:

| Ex. | Hydrophobic Comonomer (% by weight) | Av. Bead size (mm) | % Swelling in Ethanol | Water | Ethanol:water Swelling Ratio (%/%) |
|---|---|---|---|---|---|
| 14 | cyclohexyl (67) methacrylate | 1.20 | 52 | 8.7 | 6.0 |
| 15 | n-butyl acrylate (67) | 1.00 | 70 | 9.9 | 7.1 |

The following examples show that the polymers obtained with higher alkyl ($C_4$-$C_{10}$)acrylates and methacrylates exhibit superior ethanol swelling properties (high % ethanol / % water ratio).

Examples 16-28: Following the procedure described in Example 1, copolymer beads are synthesized by polymerizing a mixture containing 21 % HEMA, 27 % N-vinyl-2-pyrrolidone, 12 % macromer B and 40 % of hydrophobic methacrylates (= MA) and acrylates (= A) with different ester chain length. The percent swelling in ethanol and in water are determined and a maximum in % ethanol-% water swelling-ratio was found.

| Ex. | Hydrophobic Comonomers | Number of Carbon in Ester Chain | % Swelling in Ethanol | % Swelling in Water | Ethanol:water Swelling Ratio (%/%) |
|---|---|---|---|---|---|
| 16 | methyl-MA | 1 | 51 | 37 | 1.4 |
| 17 | ethyl-MA | 2 | 58 | 38 | 1.5 |
| 18 | n-butyl-MA | 4 | 63 | 35 | 1.8 |
| 19 | 2-ethylhexyl-MA | 8 | 68 | 33 | 2.1 |
| 20 | n-octyl-MA | 8 | 63 | 22 | 2.9 |
| 21 | octadecyl-MA | 10 | 45 | 29 | 1.5 |
| 22 | methyl-A | 1 | 56 | 45 | 1.2 |
| 23 | ethyl-A | 2 | 64 | 38 | 1.7 |
| 24 | n-butyl-A | 4 | 72 | 21 | 3.4 |
| 25 | iso-butyl-A | 4 | 57 | 27 | 2.1 |
| 26 | 2-ethylhexyl-A | 8 | 61 | 24 | 2.5 |
| 27 | n-octyl-A | 8 | 54 | 25 | 2.2 |
| 28 | decyl-A | 10 | 52 | 25 | 2.0 |

The copolymer beads made in Examples 16-28 demonstrate the effect of increasing the length of the alkyl ester group in the acrylate or methacrylate hydrophobic monomers on the ability of the beads to swell in ethanol or water. Since the amount of hydrophilic monomer (48 % by weight of total monomers) in the copolymers of each of these examples exceeded the upper allowable amount of hydrophilic monomer in the instant invention, the resulting copolymers accordingly absorbed more water (over 20 % by weight in the swollen state) than desired for the copolymers of the instant invention.

Nonetheless, the influence of increasing chain length in the hydrophobic monomer on increasing the swelling ratio of the copolymers in ethanol : water is clearly seen.

The following examples show that the ethanol-swelling properties of polymers containing no hydrophobic comonomer (low % ethanol/% water ratio) are inferior to those of polymers of this invention which contain a hydrophobic comonomer component.

Examples 29-36: Following the general procedure of Example 1, copolymer beads codntaining no hydrophobic comonomer are synthesized and their percent swelling in ethanol and water determined. As the table shows, when ethanol swelling is over 50 %, % water swelling is also very high and the swelling ratio is low. This is in contrast to the polymers of Examples 1-12.

| Ex. | Composition HEMA | NVP | MAC (% by weight) | % Swelling in Ethanol | Water | Ethanol : water Swelling Ratio (%/%) |
|---|---|---|---|---|---|---|
| 29 | 60 | - | 40 | 34 | 17 | 2.0 |
| 30 | 70 | - | 30 | 38 | 25 | 1.5 |
| 31 | 80 | - | 20 | 40 | 30 | 1.3 |
| 32 | 100 | - | - | 46 | 38 | 1.2 |
| 33 | 70 | 10 | 20 | 51 | 40 | 1.3 |
| 34 | 45 | 35 | 20 | 60 | 46 | 1.3 |
| 35 | 35 | 45 | 20 | 66 | 50 | 1.3 |
| 36 | 10 | 75 | 15 | 79 | 68 | 1.2 |

These examples demonstrate that with conventional hydrogel-compositions, as the % ethanol swelling is increased, % water swelling is increased even more dramatically, resulting in a lowering of swelling-ratio values.

Example 37: Following the procedure of Example 1 copolymer beads are synthesized by polymerizing a mixture of 42 g HEMA, 66 g MMA, 66 g EHA, 24 g NVP and 2 g ethylene dimethacrylate (EGDM) instead of the macromeric crosslinking agent MAC. Uniformly spherical beads are obtained with an average diameter of 0.72 mm.

Their composition was:

| | |
|---|---|
| HEMA: | 21 % |
| NVP: | 12 % |
| MMA: | 33 % |
| EHA: | 33 % |
| EGDM: | 1 % |

The ethanol swelling is 60 %, water swelling 11 % and the swelling ratio (% Eth/% water) = 5.5.

Example 38: Synthesis of Polymer Beads with Expanded Gel-Structure by Polymerization in Presence of Inert Diluents

A smooth wall, 1,000-ml resin flask is equipped with a reflux condenser, nitrogen-inlet tube, thermometer attached to a thermoregulator, baffle and anchor-type stirrer driven by a variable speed motor. A slow flow of nitrogen is maintained through the reaction flask at all times.

To the flask are charged 360 grams of a 20 % by weight aqueous sodium chloride solution followed by 12.5 grams (0.0615 moles), of magnesium chloride-hexahydrate. The solution is heated slowly to 80° with rapid stirring. To this solution is then added dropwise 123 mol (0.123 moles) of a 1-normal sodium hydroxide solution to form a fine, gelatinous precipitate of magnesium hydroxide in the reaction flask.

After all the sodium hydroxide is added, the stirring speed is reduced to 100 rpm and a mixture of 42 g HEMA, 55 g MMA, 55 g EHA, 24 g NVP, 50 g poly(oxypropylene) glycol, MW 3600, and 24 g macromer (b) containing dissolved therein 0.2 gram of tert-butyl peroctoate as a free radical polymerization initiator is added. (The macromer (b) is prepared as described in Example 1.)

The reaction mixture is stirred under nitrogen at 100 rpm and a 75°C for three hours. The temperature is then raised to 100°C for 1 hour after which time the flask is cooled to room temperature. 10 ml of concentrated hydrochloric acid are then added to dissolve the magnesium hydroxide suspending agent. The reaction mixture is then filtered through the cheesecloth. The isolated product beads are washed with 2,000 ml of water and soaked overnight in 500 ml of ethanol to extract any residual monomer and then extracted in a soxhlet with refluxing ethanol. The beads are then isolated by

filtration through a polyester cloth bag, which is then sewn closed, and dried in a home clothes dryer. Uniform spherical beads are obtained in a yield of 177 grams (89 %) which an average diameter of 0.74 mm and exhibited a percent swelling in water of 12 % and in ethanol of 58 %.

<u>Examples 39-48:</u> Following the procedure of Example 38, beads with expanded gel-structure are prepared using the inert diluents listed below. All polymers contain 21 % HEMA, 12 % NVP and 12 % MAC crosslinking agent.

| Ex. No. | Hydrophobic Comonomers (aa) % MMA | BA | EHA | Diluent, | % | Bead Size mm | % Swelling in Ethanol | % Swelling in Water | Swelling Ratio % EtOH/% $H_2O$ |
|---|---|---|---|---|---|---|---|---|---|
| 38 | 27.5 | - | 27.5 | poly(propylene oxide) glycol MW 3600 | 20 | 0.74 | 58 | 12 | 4.83 |
| 39 | 27.5 | - | 27.5 | " " | 40 | 1.10 | 72 | 9 | 8.00 |
| 40 | 27.5 | 27.5 | - | " " | 20 | 1.10 | 58 | 11 | 5.27 |
| 41 | 27.5 | - | 27.5 | poly(ethylene oxide) glycol MW 4000 | 20 | 0.83 | 64 | 15 | 4.23 |
| 42 | 27.5 | - | 27.5 | " " | 50 | 1.25 | 71 | 10 | 7.10 |
| 43 | 27.5 | - | 27.5 | Dodecanol | 50 | 0.88 | 73 | 10 | 7.30 |
| 44 | 27.5 | - | 27.5 | Poly(tetramethylene oxide)glycol MW 2000 | 40 | 1.05 | 69 | 10 | 6.9 |
| 45 | 27.5 | - | 27.5 | " " | 20 | 1.10 | 71 | 12 | 5.9 |
| 46 | 27.5 | - | 27.5 | PLURONIC-L122 (5000) | 20 | 0.95 | 66 | 10 | 6.6 |
| 47 | 27.5 | - | 27.5 | Butyl carbitol Acetate | 20 | - | 65 | 10 | 6.5 |
| 48 | 27.5 | - | 27.5 | Dodecanol (75 %) + poly(propylene glycol) (25 %) | 50 | 0.96 | 83 | 6 | 13.6 |

Examples 49-62: When the dry polymer beads prepared according to Example 2, having an average diameter of 1.1± 0.1 mm (-16 + 18 mesh), are immersed and shaken for 12 hours in a solution of one of the agricultural chemicals listed below, the agricultural chemical is imbibed into the bead to high concentration.

When the bead thus loaded with the agricultural chemical is placed in an aqueous environmental over an extended period in a controlled fashion.

| Example | Agricultural Chemical | Type |
|---|---|---|
| 49 | ethyl 4,4-dichloro-benzylate | miticide, acaricde |
| 50 | O-(5-chloro-1-(1-methylethyl)-1H-1,2,4-triazo-3-yl) O,O-diethyl phosphorothioate | insecticide |
| 51 | 2,6-dimethyl-N-β-methoxyethyl-chloroacetanilide | herbicide |
| 52 | N'-(4-chloro-o-tolyl)-N,N-dimethylformamidine | insecticide |
| 53 | O,O-dimethyl phosphordithioate S-ester with 4-mercaptomethyl-2-methoxy-delta$^2$-1,3,4-thiadiazolin-5-one | insecticide |
| 54 | 2-[4-chloro-6-(cyclopropylamino)-1,3,5-triazin-2-ylamino]-2-methylpropanenitrile | herbicide |
| 55 | S-[(6-chloro-2-oxooxazolo(4,5-b)-pyridin-3(2H)-yl) ethyl] O,O-dimethyl phosphorothioate | insecticide |
| 56 | 2-tert-butylamino-4-ethylamino-6-methylthio-s-triazine | herbicide |
| 57 | O,O-diethyl-O-(2-isopropyl-6-methyl-4-pyrimidinyl)phosphorothioate | insecticide, nematocide |
| 58 | disodium zinc ethylenediaminetetraacetate dihydrate | zinc supplement |
| 59 | 3-methyl-5-methylsulfonyl-1,2,4-thiadiazole | fungicide |
| 60 | 2-chloro-4,6-bis(ethylamino)-s-triazine | herbicide |
| 61 | N-(cyclopropylmethyl)-α,α,α-trifluoro-2,6-dinitro-N-propyl-p-toluidine | herbicide |
| 62 | sodium ferric ethylenediamine di(o-hydroxyphenylacetate) | iron supplement |

Example 63: 2 Grams of copolymer beads prepared according to Example 2 are imbibed with a 25 % solution of N'-(4-chloro-o-tolyl)-N,N-dimethylformamidine hydrochloride (an insecticide) in methanol/methylene chloride (1/1). The copolymer beads are loaded with 29 % active ingredient.

When the loaded beads are immersed in water, the active ingredient is slowly released with 50 % being released in 20 minutes and 90 % in one hour.

If the free amine is used rather than the hydrochloride salt as in this example, the release of active ingredient into the aqueous environment would be prolonged for an extended period.

What is claimed is:

1. A controlled-release, agricultural chemical-delivery composition which comprises

(A) a crosslinked copolymer, capable of swelling in ethanol to give a swollen copolymer containing at least 40 % by weight of ethanol, and capable of swelling in water to give a swollen copolymer containing no more than 20 % by weight of water, where the swelling ratio (% ethanol : % water) is 2:1 to 22:1, which copolymer is the copolymerization product of

(a) 50 to 99 % by weight of said copolymer of (aa) a water-insoluble monoolefinic monomer, or mixture of said monomers, or mixture of said monomers with 0 to 45 % by weight of total monomers of (bb) a water-soluble monoolefinic monomer, or mixture of said water-soluble monomers, with

(b) 50 to 1 % by weight of said copolymer of a divinyl or polyvinyl crosslinking agent having a molecular weight of 100 to 10,000, but where (b) is not more than 20 mol% of component (a), and

(B) an effective amount of an active agricultural ingredient.

2. A composition according to claim 1 wherein the copolymer (A) exhibits a swelling ratio of 3:1 to 15:1.

3. A composition according to claim 2 wherein the copolymer (A) exhibits a swelling ratio of 4:1 to 8:1.

4. A composition according to claim 1 where in the copolymer (A) at least a third by weight of the water-insoluble monomer of component (a) is a monomer with an alkyl group of 4 to 21 carbon atoms.

5. A composition according to claim 1 wherein the copolymer (A) is the copolymerization product of 75-98 % by weight of component (a) and 25-2 % by weight of component (b).

6. A composition according to claim 1 wherein component (a) comprises 70-95 % by weight of water-insoluble monomer (aa) and 30-5 % by weight of water-soluble monomer (bb).

7. A composition according to claim 1 wherein component (a) is 75-0 % by weight of methyl acrylate, methyl methacrylate or mixture thereof, and 25-100 % by weight of a $C_4$-$C_{10}$ alkyl acrylate or methacrylate or mixture thereof.

8. A composition according to claim 1 wherein the water-insoluble monomer of component (a) is methyl methacrylate, n-butyl acrylate, n-butyl methacrylate, 2-ethylhexyl acrylate, n-octyl acrylate, n-octyl methacrylate, glycidyl methacrylate, vinyl acetate or mixtures thereof.

9. A composition according to claim 1 wherein 10-60 % by weight of component (a) is n-butyl acrylate or 2-ethylhexyl acrylate.

10. A composition according to claim 1 wherein the water-soluble monomer of component (a) is N-vinyl-2-pyrrolidone, 2-hydroxyethyl acrylate, 2-hydroxyethyl methacrylate, acrylic acid, methacrylic acid, N,N-dimethylacrylamide, 2-dimethylaminoethyl methacrylate or mixtures thereof.

11. A composition according to claim 1 where the crosslinking agent of component (b) is a terminal diolefinic hydrophobic macromer having a molecular weight from about 400 to about 8000, said macromer having the formula

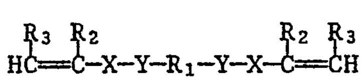

wherein $R_1$ is a polycondensate chain having a molecular weight from about 200 to about 8000, which is the residue of a poly(propylene oxide) or poly(tetramethylene oxide) glycole having ether linkages; $R_2$ is hydrogen, methyl or $-CH_2COOR_4$, wherein $R_4$ is hydrogen or an alkyl group with up to 10 carbon atoms; $R_3$ is hydrogen or $COOR_4$, with the proviso that at least one of $R_2$ and $R_3$ is hydrogen; X is oxa, -COO-, or $-CONR_5-$, wherein $R_5$ is hydrogen or alkyl with up to 5 carbon atoms and Y is a direct bond or the radical $-R_6-Z_1-CO-NH-R_7-NH-CO-Z_2-$, wherein $R_6$ is linked to X and represents branched or linear alkylene with up to 7 carbon atoms; $Z_1$ and $Z_2$ is oxa or $NR_5$ and $R_7$ is the diradical of an aliphatic or aromatic diisocyanate, with the proviso that in case X is oxa, Y is different from a direct bond, and $R_2$ and $R_3$ are hydrogen.

12. A composition according to claim 11 wherein $R_1$ is polypropylene oxide or polytetramethyleneoxide chain with a molecular weight of about 600 to about 4000.

13. A composition according to claim 11 wherein said macromer is a polytetramethyleneoxide glycol with a molecular weight of about 600 to about 4000, endcapped with toluene or isophorone diisocyanate and reacted with 2 moles of a hydroxyalkyl acrylate or methacrylate, wherein alkyl has 2 to 4 carbon atoms.

14. A composition according to claim 1 wherein the crosslinking agent (b) is a $C_2$-$C_6$ alkylene diacrylate, a $C_2$-$C_6$ alkylene dimethacrylate, 3-oxapentamethylene diacrylate, 3-oxapentamethylene dimethacrylate, trimethylolpropane triacrylate or mixtures thereof.

15. A composition according to claim 1 where the copolymer (A) is the copolymerization product of 85-99 % of component (a) and 15-1 % of component (b), where (a) is 15-50 % by weight of methyl methacrylate, 15-70 % by weight of 2-ethylhexyl acrylate, n-butyl acrylate or n-octyl acrylate, 5-15 % by weight of N-vinyl-2-pyrrolidone and 0-25 % by weight of 2-hydroxyethyl methacrylate.

FO 7.5/GOT/ue*